(19) Europäisches Patentamt / European Patent Office / Office européen des brevets

(11) EP 3 992 860 A1

(12) EUROPEAN PATENT APPLICATION

(43) Date of publication:
04.05.2022 Bulletin 2022/18

(21) Application number: 21183954.3

(22) Date of filing: 06.07.2021

(51) International Patent Classification (IPC):
G06N 3/04 $^{(2006.01)}$    G06N 3/08 $^{(2006.01)}$

(52) Cooperative Patent Classification (CPC):
G06N 3/0454; G06N 3/08; G06N 3/082

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 08.10.2020 JP 2020170322

(71) Applicant: FUJITSU LIMITED
Kanagawa 211-8588 (JP)

(72) Inventor: Koda, Satoru
Kanagawa, 211-8588 (JP)

(74) Representative: Hoffmann Eitle
Patent- und Rechtsanwälte PartmbB
Arabellastraße 30
81925 München (DE)

(54) INFORMATION PROCESSING PROGRAM, INFORMATION PROCESSING DEVICE, AND INFORMATION PROCESSING METHOD

(57) An information processing program for causing a computer to execute processing, the processing including: converting each data included in a destination dataset and each data included in a plurality of source dataset candidates into a frequency spectrum; calculating an average of a spectrum intensity of the data included in the destination dataset and each average of a spectrum intensity of the data included in the plurality of source dataset candidates; calculating, for each of the plurality of source dataset candidates, a similarity with the destination dataset by using an inner product of the spectrum intensity of the data included in the destination dataset and the spectrum intensity of the data included in the plurality of source dataset candidates; and determining a source dataset that is the most similar to the destination dataset from among the plurality of source dataset candidates on the basis of the calculated similarity.

FIG. 1

EP 3 992 860 A1

**Description**

FIELD

The embodiment discussed herein is related to an information processing program, an information processing device, and an information processing method.

BACKGROUND

Transfer learning has been known as a method for learning a machine learning model in a neural network.
In transfer learning, a machine learning model learned using a dataset (transfer source dataset) in a certain region (domain) is used for learning on a dataset (transfer destination dataset) in another region.
Hereinafter, a dataset used to learn a machine learning model before transfer may be referred to as a transfer source dataset, and a dataset used to learn a machine learning model after transfer may be referred to as a transfer destination dataset.
The machine learning model is learned using the transfer source dataset, this machine learning model is transferred, and the machine learning model is relearned using the transfer destination dataset, and accordingly, transfer learning is achieved.
By performing such transfer learning, it is possible to create a machine learning model with high accuracy even in a region having only a limited amount of data, and in addition, it is possible to achieve learning of the machine learning model in a short time.
In typical transfer learning, a transfer source dataset is selected from among a plurality of transfer source dataset candidates using dynamic time warping (DTW) and dynamic time warping barycenter averaging (DBA).
The DTW is an algorithm for measuring a distance between two sequences, and the DBA is an algorithm for obtaining an average sequence of the plurality of sequences.
In a typical method for selecting a transfer source dataset in transfer learning, an average sequence of each class of a transfer destination and the transfer source candidate is calculated using the DBA, and the minimum DTW distance between the DBA average sequences is defined as a distance between data of the transfer source candidate and transfer destination data (inter-data distance).
Then, a transfer source candidate dataset having the minimum inter-data distance from the transfer destination dataset is selected as a transfer source dataset, and transfer learning is started in a convolutional neural network (CNN) using the selected transfer source dataset.
When the transfer learning is performed, it is desirable to select a transfer source dataset that has an effect of transfer. This is because selecting of a dataset that is not appropriate as the transfer source dataset deteriorates a performance of transfer learning.
Examples of the related art include U.S. Patent Application Publication No. 2010/0318482, Japanese Laid-open Patent Publication No. 2020-13547, and Japanese Laid-open Patent Publication No. 2016-191975.

SUMMARY

TECHNICAL PROBLEM

However, with the typical method for selecting the transfer source dataset in transfer learning described above, calculation cost of each of the DTW and the DBA is high. Therefore, the above method has a problem in that calculation cost needed for selecting the transfer source dataset is high. For example, it takes time to select the transfer source dataset.
Furthermore, in the typical method for selecting the transfer source dataset described above, the transfer source candidate dataset having the minimum inter-data distance from the transfer destination dataset is selected as a transfer source dataset. However, there is a case where the selected transfer source dataset is not close to the transfer destination dataset depending on the class of the transfer destination dataset. This is because the inter-dataset distance is assumed as the minimum interclass distance among all the interclass distances.
Furthermore, regarding the neural network, a convolutional neural network (CNN) that extracts characteristics of data by repeatedly convolving input data has been known. The CNN is often used for analysis of time-series data and transfer learning.
In the CNN, partial characteristics of data in a convolution layer is extracted using a filter (convolution filter). In the CNN, a filter size of the convolution filter is a parameter that is specified in advance. Because the filter size strongly affects analysis accuracy, it is needed to appropriately specify the filter size.
In the typical method, filters having a fixed size between 3 to 15 are often used as the convolution filter.

Furthermore, in the CNN, multiple filters having different sizes may be used, for example, 64 filters having the size "3" and 64 filters having the size "15" are used.

A method using a peak length where peaks occurs in time series as a filter size and calculating a spectrum intensity of a dataset through Fourier transform and selecting a filter size including a wavelength of a frequency having the largest intensity have been known.

However, frequency waves that are easy or difficult to be captured depending on the filter size exist. Therefore, the filter size, selected as described above, that includes the wavelength of the frequency having the largest spectrum intensity is not effective on, for example, data in which peaks occur at a plurality of different frequencies.

A large-sized filter tends to easily capture waves having a small frequency but tends to be hard to capture waves having a large frequency. On the other hand, a small-sized filter tends to be hard to capture the waves having a small frequency and tends to easily capture waves having a large frequency. Sequential data of which an intensity changes in time series may be referred to as a sequence.

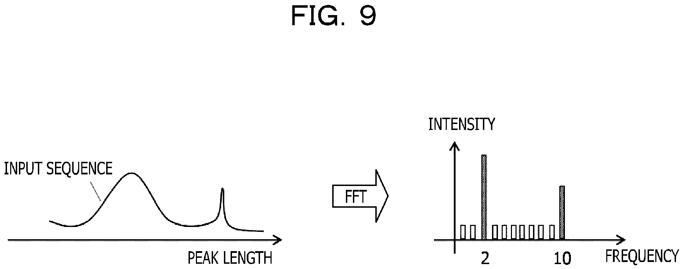

FIG. 9 is a diagram illustrating an example in which an input sequence is converted into a frequency spectrum through fast Fourier transform (FFT).

In the sequence illustrated in FIG. 9, in the converted frequency spectrum, two frequencies "2" and "10" have intensity peaks.

Here, with the filter size that captures the wave having the frequency "2", it is hard to capture the wave having the frequency "10". On the other hand, with the filter size that captures the wave having the frequency "10", it is hard to capture the wave having the frequency "2".

An object of one aspect of the embodiment is to efficiently perform transfer learning.

SOLUTION TO PROBLEM

According to an aspect of the embodiments, there is provided an information processing program for causing a computer to execute processing. In an example, the processing includes: converting each data included in each of a plurality of classes of a transfer destination dataset and each data included in each of a plurality of classes of a plurality of transfer source dataset candidates into a frequency spectrum; calculating an average of a spectrum intensity of the data included in each class of the transfer destination dataset and each average of a spectrum intensity of the data included in the plurality of classes of the plurality of transfer source dataset candidates; specifying a similarity between the plurality of classes of the transfer destination dataset and the plurality of classes of the plurality of transfer source dataset candidates on the basis of an inner product of the spectrum intensity of the data included in each class of the transfer destination dataset and the spectrum intensity of the data included in the plurality of classes of the plurality of transfer source dataset candidates; and determining a transfer source dataset that is the most similar to each class of the transfer destination dataset from among the plurality of transfer source dataset candidates on the basis of the specified similarity.

The object and advantages of the invention will be realized and attained by means of the elements and combinations particularly pointed out in the claims.

It is to be understood that both the foregoing general description and the following detailed description are exemplary and explanatory and are not restrictive of the invention.

ADVANTAGEOUS EFFECTS OF INVENTION

According to one embodiment, transfer learning can be performed efficiently.

BRIEF DESCRIPTION OF DRAWINGS

FIG. 1 is a diagram illustrating a functional configuration of an information processing device as an example of an embodiment;
FIG. 2 is a diagram illustrating an interclass distance between a class of a transfer destination dataset and a class of a transfer source dataset;
FIG. 3 is a diagram illustrating a hardware configuration of the information processing device as an example of the embodiment;
FIG. 4 is a diagram for explaining transfer learning by the information processing device as an example of the embodiment;
FIG. 5 is a flowchart for explaining processing of a transfer source dataset selection unit of the information processing device as an example of the embodiment;

FIG. 6 is a flowchart for explaining processing of a filter setting unit of the information processing device as an example of the embodiment;

FIG. 7 is a diagram illustrating an effect of transfer learning by the information processing device as an example of the embodiment;

FIG. 8 is a diagram illustrating an effect of transfer learning by the information processing device as an example of the embodiment; and

FIG. 9 is a diagram illustrating an example in which an input sequence is converted into a frequency spectrum through FFT.

DESCRIPTION OF EMBODIMENTS

Hereinafter, embodiments of an information processing program, an information processing device, and an information processing method will be described with reference to the drawings. However, the embodiment to be described below is merely an example, and there is no intention to exclude application of various modifications and techniques not explicitly described in the embodiment. That is, for example, the present embodiment may be modified in various ways to be implemented without departing from the gist thereof. Furthermore, each drawing is not intended to include only the components illustrated in the drawings and may include another function and the like.

(A) Configuration

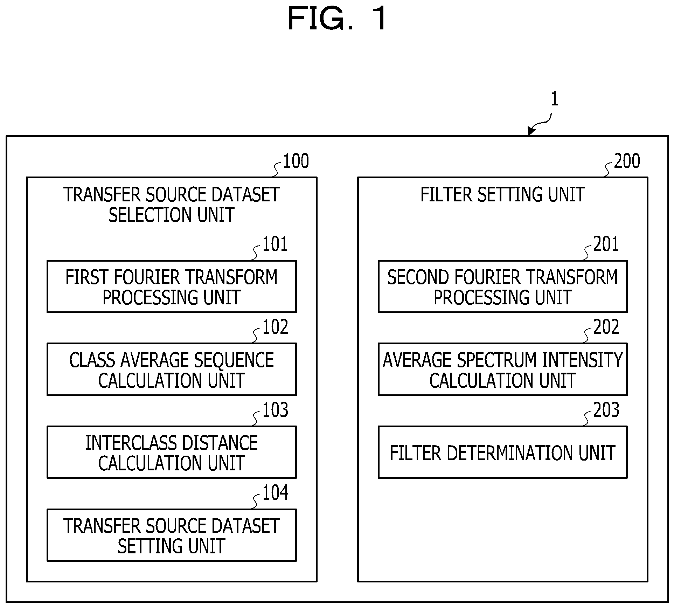

FIG. 1 is a diagram illustrating a functional configuration of an information processing device 1 as an example of an embodiment.

As illustrated in FIG. 1, the information processing device 1 includes a transfer source dataset selection unit 100 and a filter setting unit 200.

The transfer source dataset selection unit 100 achieves transfer source dataset selection processing for selecting a transfer source dataset from among a plurality of datasets (transfer source dataset candidate) stored in a transfer source data repository in transfer learning of a neural network. Hereinafter, the transfer source dataset may be represented using a reference Dsrc.

The selected transfer source dataset Dsrc is used to learn a machine learning model. The machine learning model learned in this way is transferred and relearned using a transfer destination dataset. Hereinafter, the transfer destination dataset may be represented using a reference Dtar.

The transfer source dataset and the transfer destination dataset each may include learning data and correct answer data. The learning data in the transfer source dataset may be referred to as transfer source data. Furthermore, the learning data in the transfer destination dataset may be referred to as transfer destination data. Furthermore, hereinafter, in a case where the transfer source dataset and the transfer destination dataset are not particularly distinguished from each other, both of the transfer source dataset and the transfer destination dataset may be simply expressed as a dataset.

In the present embodiment, an example will be described in which the transfer source data and the transfer destination data are sequential data of which an intensity changes in time series. Hereinafter, the transfer source data and the transfer destination data may be referred to as a sequence. The sequence is, for example, an utterance signal or a communication signal and can be represented as a waveform.

Furthermore, in the present embodiment, an example will be described in which each of the transfer source dataset and the transfer destination dataset has a plurality of classes.

As illustrated in FIG. 1, the transfer source dataset selection unit 100 has functions as a first Fourier transform processing unit 101, a class average sequence calculation unit 102, an interclass distance calculation unit 103, and a transfer source dataset setting unit 104.

The first Fourier transform processing unit 101 performs Fourier transform on all sequences in all datasets into a frequency spectrum through FFT. That is, for example, the first Fourier transform processing unit 101 performs Fourier transform on the transfer destination dataset Dtar and all the sequences in all the transfer destination datasets {Dsrc,i } i stored in the transfer source data repository into a frequency spectrum through the FFT. The reference i is a variable representing an arbitrary transfer source dataset among the plurality of transfer source datasets.

The first Fourier transform processing unit 101 executes, for example, the following processing on a sequence h.

$$\boldsymbol{h} = [h_0, ..., h_{T-1}] \in \mathbb{R}^T \rightarrow \text{FFT} \rightarrow \boldsymbol{c} = [c_0, ..., c_{T-1}] \in \mathbb{C}^T$$

Note that the reference T represents a sequence length and is data-dependent.

Furthermore, in a case where the sequence length is set to $2^n$, the first Fourier transform processing unit 101 resizes the sequence length by zero padding, linear interpolation, or the like

Note that the reference n is represented as follows.

$$n \in \mathbb{N}$$

Furthermore, it is desirable to multiply the sequence h by a window function to be a periodic function.

The class average sequence calculation unit 102 obtains an average sequence of each class included in all the datasets as an average of frequency spectrum intensities.

The class average sequence calculation unit 102 converts all the sequences belonging to the class into a fixed length spectrum through the Fourier transform and defines the average sequence of the class according to the average of the spectrum intensities.

For example, the class average sequence calculation unit 102 extracts N components from the top from low frequency components of the frequency spectrum intensity on the basis of the frequency spectrum intensity calculated by the first Fourier transform processing unit 101.

Note that the number N of the frequency spectra to be extracted is represented as follows.

$$N \in \mathbb{N}$$

The sequence h is expressed by a fixed length vector u represented by the following formula (1).

$$\text{FIXED LENGTH VECTOR } \boldsymbol{u} = [|c_0|, \ldots, |c_{N-1}|] \in \mathbb{R}^N \quad \cdots (1)$$

Note that the reference $|c_i|$ indicates a norm.

Regarding the sequence of which the sequence length is set to $[T/2] < N$, it is desirable to perform zero padding on the $[T/2]$-th component of u and sequent components.

The class average sequence calculation unit 102 calculates a class average sequence for each class of each dataset.

Data of the class of the transfer source dataset Dsrc may be referred to as the following reference.

$$\boldsymbol{D}^l_{src,i}$$

The reference I is a variable that represents any one of the plurality of classes in the transfer source dataset.

Furthermore, data of the class of the transfer destination dataset Dtar may be referred to as the following reference.

$$\boldsymbol{D}^k_{tar}$$

The reference k is a variable that represents any one of the plurality of classes in the transfer source dataset.

Furthermore, the class average sequence may be represented by the following format.

$$AVE(\boldsymbol{D}^*_*)$$

The class average sequence calculation unit 102 calculates the class average sequence by taking an average of u with a sample belonging to the class (+ norm normalization).

The interclass distance calculation unit 103 defines (calculate) a distance between the average sequences calculated by the class average sequence calculation unit 102 on the basis of an inner product between the spectrum intensities.

The interclass distance calculation unit 103 calculates an interclass distance using the following formula (2).

$$d\left(\boldsymbol{D}^k_{tar}, \boldsymbol{D}^l_{src,i}\right) = 1 - AVE\left(\boldsymbol{D}^k_{tar}\right)^T AVE\left(\boldsymbol{D}^l_{src,i}\right) \quad \cdots (2)$$

The transfer source dataset setting unit 104 calculates each similarity between each class of the transfer destination dataset and each class of each transfer source dataset and selects a transfer source dataset for each class. The transfer source dataset setting unit 104 uses the distance between the classes as the similarity.

The transfer source dataset setting unit 104 selects a class having the shortest interclass distance to each class of the transfer destination dataset, that is, for example, a class of the most similar transfer source dataset (most similar transfer source class).

The transfer source dataset setting unit 104 selects a class of a transfer source dataset that satisfies the following formula (3) for each class of the transfer destination dataset.

$$D^{\hat{l}}_{src,\hat{\imath}} = \underset{i,l}{\arg\min}\, d\big(D^k_{tar}, D^l_{src,i}\big) \qquad \cdots (3)$$

$D^k_{tar}$ : CLASS OF TRANSFER DESTINATION DATASET

$D^l_{src,i}$ : CLASS OF TRANSFER SOURCE DATASET

The transfer source dataset setting unit 104 combines all the most similar transfer source classes selected for the respective classes of the transfer destination dataset Dtar and generates a transfer source dataset Dsrc.

The transfer source dataset Dsrc generated by the transfer source dataset setting unit 104 is represented by the following formula (4).

$$D_{src} = \Big\{D^{\hat{l}}_{src,\hat{\imath}}\Big\}_{\hat{\imath},\hat{l}} \qquad \cdots (4)$$

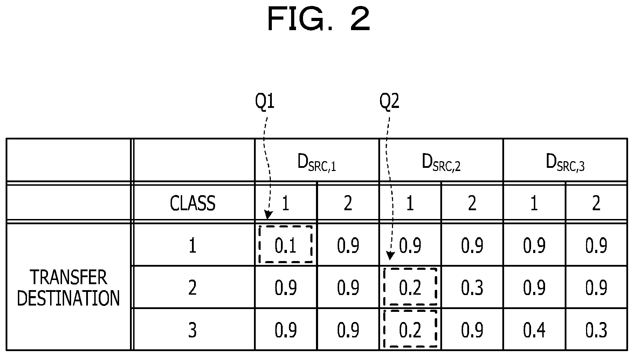

FIG. 2 is a diagram illustrating an interclass distance between the class of the transfer destination dataset and the class of the transfer source dataset.

In the example illustrated in FIG. 2, interclass distances between three classes "1", "2", "3" of the transfer destination dataset and two classes "1" and "2" of transfer source datasets Dsrc,1, Dsrc,2, and Dsrc,3 are illustrated in a matrix (matrix).

In the example illustrated in FIG. 2, for the class "1" of the transfer destination dataset Dtar, the class "1" of the transfer source dataset Dsrc,1 has the shortest interclass distance (refer to reference Q1). Therefore, the transfer source dataset setting unit 104 selects the class "1" of the transfer source dataset Dsrc,1, as a transfer source class, for the class "1" of the transfer destination dataset Dtar.

Similarly, for the class "2" of the transfer destination dataset Dtar, the class "1" of the transfer source dataset Dsrc,2 has the shortest interclass distance (refer to reference Q2). Furthermore, for the class "3 of the transfer destination dataset Dtar, the class "1" of the transfer source dataset Dsrc,2 has the shortest interclass distance (refer to reference Q3). Therefore, the transfer source dataset setting unit 104 selects the class "1" of the transfer source dataset Dsrc,2, as the transfer source class for each of the class "2" and "3" of the transfer destination dataset Dtar.

The transfer source dataset setting unit 104 integrates the selected transfer source classes and generates the transfer source dataset Dsrc.

In the example illustrated in FIG. 2, the generated transfer source dataset Dsrc is represented, for example, as follows. In the following example, overlap is excluded in the destination by indicating only one class "1" of the transfer source dataset Dsrc,2 for the classes "2" and "3" of the transfer destination dataset Dtar.

$$D_{src} = \Big\{D^1_{src,1}, D^1_{src,2}\Big\}$$

Furthermore, it is desirable for the transfer source dataset setting unit 104 to resize the generated transfer source dataset Dsrc to the sequence length (or average length) of the transfer destination dataset Dtar as needed. The transfer source dataset Dsrc generated in this way is used for transfer learning of the machine learning model.

The filter setting unit 200 achieves filter setting processing for setting a convolution filter in the CNN.

The filter setting unit 200 may set a convolution filter size in a first layer of the CNN that largely affects accuracy, for example. Furthermore, the filter size is not limited to this, and the filter setting unit 200 may set a convolution filter size of a layer other than the first layer of the CNN and can perform setting as appropriately changing the convolution filter size.

As illustrated in FIG. 1, the filter setting unit 200 has functions as a second Fourier transform processing unit 201, an average spectrum intensity calculation unit 202, and a filter determination unit 203.

The second Fourier transform processing unit 201 performs Fourier transform on all sequences in the transfer source dataset selected by the transfer source dataset selection unit 100 into a frequency spectrum (spectrum intensity) through the FFT.

The average spectrum intensity calculation unit 202 calculates an average of the spectrum intensity for each frequency on the basis of the spectrum intensity calculated by the second Fourier transform processing unit 201. Hereinafter, the average value of the spectrum intensity obtained for each frequency may be referred to as an average spectrum intensity.

Note that the average spectrum intensity can be calculated using various existing methods, and description thereof will be omitted.

The filter determination unit 203 determines a filter size and the number thereof (the number of filters). The filter determination unit 203 determines the filter size and the number of filters on the basis of information regarding the frequency spectrum.

The filter determination unit 203 determines the filter size on the basis of a sequence length T and a frequency fi. For example, the filter determination unit 203 calculates the filter size using the following formula (5).

$$\text{Filter size } S = T/(n \times fi) \quad \dots (5)$$

Note that the reference n indicates a variable, and for example, is a natural number. The variable n can be appropriately changed. The filter determination unit 203 determines a filter size S that is proportional to the sequence length T and is inversely proportional to the frequency fi.

The information processing device 1 uses a large filter to capture characteristics of a global wave (low frequency wave) and uses a small filter to capture characteristics of a local wave (high frequency wave). This makes it possible to efficiently capture each of the characteristics of the low frequency waves and the characteristics of the high frequency waves. Note that the above-described formula (5) used to calculate the filter size S can be appropriately changed and used.

Furthermore, the filter determination unit 203 determines the number of filters (the number of filters) to be used according to the intensity of the frequency.

For example, the filter determination unit 203 determines the number of filters using the following formula (6).

$$\text{THE NUMBER OF FILTERS } k = K \times |c_i| \quad \cdots (6)$$

Note that K is the total number of filters, and an intensity u of each frequency is assumed to be $u = [|c_0|,...,|c_{(N-1)}|]$.

The wave of the sequence typically includes a plurality of components. For easy capturing of dominant waves among the above, the information processing device 1 sets more filters having a size suitable for capturing such waves.

For example, when it is assumed that the total number of filters be 128 (K = 128), in a case where an intensity of a frequency "2" be 0.75, an intensity of a frequency "10" be 0.25, and an intensity of another frequency be zero, the filter determination unit 203 determines the filter size and the number of filters as described below.

"96 (= 128 × 0.75)" filters of size "T/(2 × 2)"
"32 (= 128 × 0.25)" filters of size "T/(2 × 10)"

Note that the intensity u is represented as follows.

$$\|u\|_2 = 1$$

Furthermore, constant components are not considered, and rounding down and rounding up may be appropriately adjusted. Note that the above-described formula (6) used to calculate the number of filters k can be appropriately changed and used.

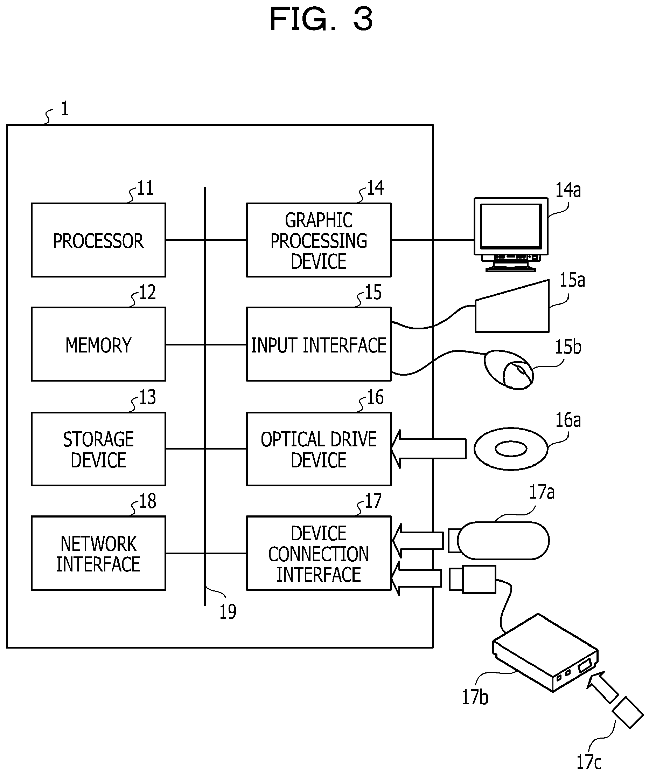

FIG. 3 is a diagram illustrating a hardware configuration of the information processing device 1 as an example of the embodiment.

The information processing device 1 includes, for example, a processor 11, a memory 12, a storage device 13, a graphic processing device 14, an input interface 15, an optical drive device 16, a device connection interface 17, and a network interface 18 as components. These components 11 to 18 are configured to be able to communicate with each other via a bus 19.

The processor 11 is a control unit that controls the entire information processing device 1. The processor 11 may be a multiprocessor. The processor 11 may be, for example, any one of a central processing unit (CPU), a micro processing unit (MPU), a digital signal processor (DSP), an application specific integrated circuit (ASIC), a programmable logic device (PLD), and a field programmable gate array (FPGA). Furthermore, the processor 11 may be a combination of two or more types of elements of the CPU, MPU, DSP, ASIC, PLD, and FPGA.

Then, the functions as the transfer source dataset selection unit 100 and the filter setting unit 200 illustrated in FIG. 1 can be achieved by executing a control program (information processing program: not illustrated) by the processor 11.

Note that the information processing device 1 achieves the functions as the transfer source dataset selection unit 100 and the filter setting unit 200, for example, by executing a program (information processing program, OS program) recorded in a computer-readable non-transitory recording medium. The OS is an abbreviation for an operating system.

A program in which processing content to be executed by the information processing device 1 is described may be recorded in various recording media. For example, the program to be executed by the information processing device 1 may be stored in the storage device 13. The processor 11 loads at least a part of the program in the storage device 13 on the memory 12 and executes the loaded program.

Furthermore, the program to be executed by the information processing device 1 (processor 11) may be recorded on a non-transitory portable recording medium such as an optical disk 16a, a memory device 17a, or a memory card 17c. The program stored in the portable recording medium may be executed after being installed in the storage device 13, for example, by control from the processor 11. Furthermore, the processor 11 may directly read and execute the program from the portable recording medium.

The memory 12 is a storage memory including a read only memory (ROM) and a random access memory (RAM). The RAM of the memory 12 is used as a main storage device of the information processing device 1. The RAM temporarily stores at least a part of programs to be executed by the processor 11. Furthermore, the memory 12 stores various types of data needed for the processing by the processor 11.

The storage device 13 is a storage device such as a hard disk drive (HDD), a solid state drive (SSD), or a storage class memory (SCM), and stores various types of data. The storage device 13 is used as an auxiliary storage device of the information processing device 1. The storage device 13 stores an OS program, a control program, and various types of data. The control program includes an information processing program.

Note that a semiconductor storage device such as an SCM or a flash memory may be used as the auxiliary storage device. Furthermore, redundant arrays of inexpensive disks (RAID) may be formed by using a plurality of the storage devices 13.

Furthermore, the storage device 13 may store various types of data generated when the transfer source dataset selection unit 100 and the filter setting unit 200 described above execute each processing.

For example, the storage device 13 may store calculation results calculated by the first Fourier transform processing unit 101, the class average sequence calculation unit 102, the interclass distance calculation unit 103, the second Fourier transform processing unit 201, and the average spectrum intensity calculation unit 202. Furthermore, the storage device 13 may store the transfer source dataset Dsrc set by the transfer source dataset setting unit 104 and the filter size and the number of filters determined by the filter determination unit 203.

The graphic processing device 14 is connected to a monitor 14a. The graphic processing device 14 displays an image on a screen of the monitor 14a according to a command from the processor 11. Examples of the monitor 14a include a display device using a cathode ray tube (CRT), a liquid crystal display device, or the like.

The input interface 15 is connected to a keyboard 15a and a mouse 15b. The input interface 15 transmits signals sent from the keyboard 15a and the mouse 15b to the processor 11. Note that the mouse 15b is one example of a pointing device, and another pointing device may also be used. Examples of the another pointing device include a touch panel, a tablet, a touch pad, a track ball, or the like.

The optical drive device 16 reads data recorded on the optical disk 16a by using laser light or the like. The optical disk 16a is a non-transitory portable recording medium having data recorded in a readable manner by reflection of light. Examples of the optical disk 16a include a digital versatile disc (DVD), a DVD-RAM, a compact disc read only memory (CD-ROM), a CD-recordable (R)/rewritable (RW), or the like.

The device connection interface 17 is a communication interface for connecting peripheral devices to the information processing device 1. For example, the device connection interface 17 may be connected to the memory device 17a and a memory reader/writer 17b. The memory device 17a is a non-transitory recording medium having a communication function with the device connection interface 17, and is, for example, a universal serial bus (USB) memory. The memory reader/writer 17b writes data to the memory card 17c or reads data from the memory card 17c. The memory card 17c is a card-type non-transitory recording medium.

The network interface 18 is connected to a network. The network interface 18 transmits and receives data via the network. Other information processing devices, communication devices, and the like may be connected to the network.

(B) Operation

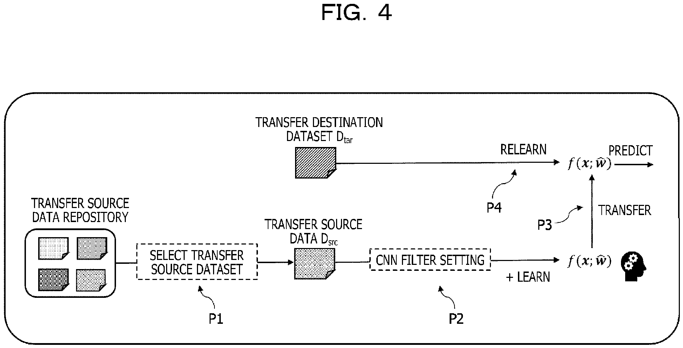

FIG. 4 is a diagram for explaining transfer learning by the information processing device 1 as an example of the embodiment.

The transfer source dataset selection unit 100 selects a transfer source dataset Dsrc from among a plurality of datasets stored in a transfer source data repository (transfer source dataset) (refer to reference P1).

The filter setting unit 200 sets a convolution filter in the CNN (refer to reference P2). In the CNN, characteristics of the transfer source dataset Dsrc (sequence) are extracted using the set convolution filter and used to learn a machine learning model f (x; w^).

Note that the reference w^ indicates an initial value of a transfer destination model parameter and is assumed to represent w with a hat (garret).

The machine learning model f (x; w^) learned in this way is transferred (refer to reference P3), and relearning using the transfer destination dataset Dtar is performed (refer to reference P4). The machine learning model f (x; w^) learned in this way is used for prediction in business or the like.

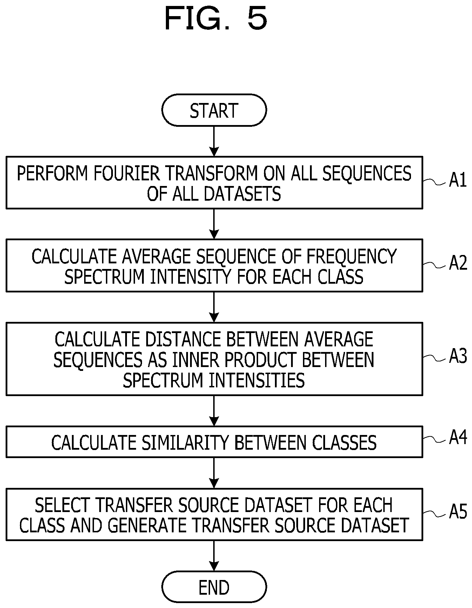

Next, processing of the transfer source dataset selection unit 100 in the information processing device 1 as an example of the embodiment will be described with reference to the flowchart (steps A1 to A5) illustrated in FIG. 5.

In the transfer source dataset selection unit 100, the first Fourier transform processing unit 101 performs Fourier transform on all sequences in all datasets into a frequency spectrum through the FFT (step A1).

The class average sequence calculation unit 102 obtains an average sequence of each class included in all the datasets as an average of the frequency spectrum intensities (step A2).

The interclass distance calculation unit 103 calculates a distance between the average sequences calculated by the class average sequence calculation unit 102 on the basis of an inner product between the spectrum intensities (step A3).

The transfer source dataset setting unit 104 calculates each similarity between each class of the transfer destination dataset and each class of each transfer source dataset (step A4).

Furthermore, the transfer source dataset setting unit 104 selects a class having the shortest interclass distance, that is, for example, a class of the most similar transfer source dataset (most similar transfer source class) for each class of the transfer destination dataset. Then, the transfer source dataset setting unit 104 combines all the most similar transfer source classes selected for each class of the transfer destination dataset and generates the transfer source dataset. (Step A5). Thereafter, the processing ends.

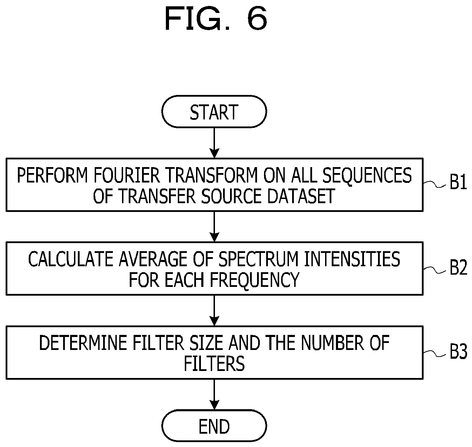

Next, processing of the filter setting unit 200 in the information processing device 1 as an example of the embodiment will be described with reference to the flowchart (steps B1 to B3) illustrated in FIG. 6.

The second Fourier transform processing unit 201 performs Fourier transform on all sequences in the transfer source dataset selected by the transfer source dataset selection unit 100 into a frequency spectrum (spectrum intensity) through the FFT (step B1).

The average spectrum intensity calculation unit 202 calculates an average of the spectrum intensity for each frequency on the basis of the spectrum intensity calculated by the second Fourier transform processing unit 201 (step B2).

Thereafter, the filter determination unit 203 determines the filter size and the number of filters (step B3) and terminates the processing.

(C) Effects

As described above, according to the information processing device 1 as an example of the embodiment, the first Fourier transform processing unit 101 performs Fourier transform on all the sequences in all the datasets into the frequency spectrum through the FFT. Then, the class average sequence calculation unit 102 obtains an average sequence of each class included in all the datasets by calculating the average of the frequency spectrum intensities.

As a result, the average sequence of each class can be calculated at low cost without calculating the DBA that needs high calculation cost.

Furthermore, the interclass distance calculation unit 103 calculates a distance between the average sequences calculated by the class average sequence calculation unit 102 on the basis of an inner product between the spectrum intensities. As a result, each interclass distance can be calculated at low cost without calculating the DTW that needs high calculation cost.

That is, for example, the information processing device 1 can shorten a time needed for selecting the transfer source dataset. Furthermore, this makes it possible to efficiently perform transfer learning.

Here, a simulation result is indicated that is performed by preparing 10 datasets as the transfer destination datasets.

Each piece of data has 300 samples, three classes, and a sequence length of 256. In the simulation performed under such conditions, processing, which has needed 726 seconds to select the transfer source dataset using typical methods, needs 0.085 seconds with the information processing device 1. This processing can be achieved in a time that is about 0.01% of that of the typical methods.

Furthermore, the transfer source dataset setting unit 104 calculates each similarity between each class of the transfer destination dataset and each class of each transfer source dataset and selects a class of a transfer source dataset that has high similarity for each class of the transfer destination dataset. Then, the transfer source dataset setting unit 104 combines these classes and generates a transfer source dataset.

As a result, because the class similar to each class of the transfer destination dataset is set as a transfer source, analysis accuracy after transfer learning can be improved. Furthermore, this makes it possible to efficiently perform transfer learning.

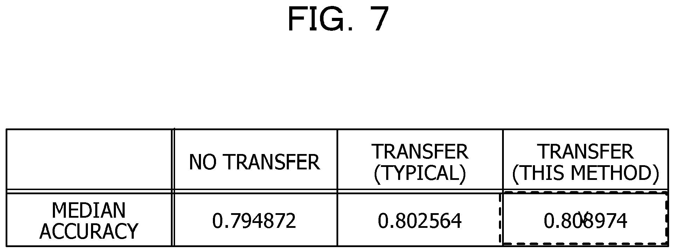

FIG. 7 is a diagram illustrating an effect of transfer learning by the information processing device 1 as an example of the embodiment.

In FIG. 7, a result of verifying a transfer effect using 60 datasets in a UCR data repository is illustrated. As illustrated in FIG. 7, according to the information processing device 1, analysis accuracy of a median accuracy is improved as compared with a case of no transfer learning (no transfer) and the typical transfer learning method.

Furthermore, the second Fourier transform processing unit 201 performs Fourier transform on all sequences in the transfer source dataset selected by the transfer source dataset selection unit 100 into a frequency spectrum (spectrum intensity) through the FFT. Furthermore, the average spectrum intensity calculation unit 202 calculates an average of the spectrum intensity for each frequency on the basis of the calculated spectrum intensity.

Then, the filter determination unit 203 determines the filter size S that is proportional to the sequence length T and is inversely proportional to the frequency fi on the basis of the formula (5) described above. In this way, an appropriate filter size according to the spectral information (sequence length T and frequency fi) can be determined. Furthermore, the filter determination unit 203 determines the number of filters according to the intensity of the frequency.

In this way, the filter determination unit 203 determines the filter size and the number of filters so as to generate the convolution filter that appropriately captures the characteristics of the sequence including the plurality of frequencies. Furthermore, this makes it possible to efficiently perform transfer learning.

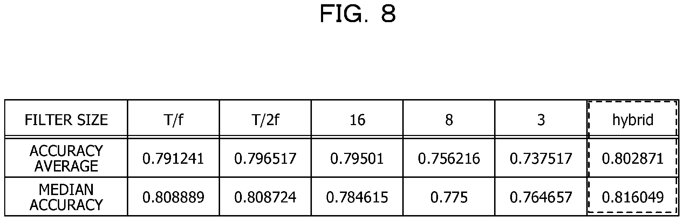

FIG. 8 is a diagram illustrating an effect of the transfer learning by the information processing device 1 as an example of the embodiment.

In FIG. 8, a simulation result using 60 datasets in the UCR data repository is illustrated. In FIG. 8, a result using a convolution filter to which a filter size "hybrid" is set by the information processing device 1 is illustrated.

An example is illustrated in which a neural network (NN) architecture uses a three-layer CNN and only the size of the convolution filter in the first layer of the CNN that largely affects the accuracy is adjusted.

Furthermore, in the hybrid set by the information processing device 1, for convenience, the size of a half of the filters is set to be T/2fd, and the other half is set to be 16. Note that the reference T indicates a sequence length, and the reference fd indicates a frequency with the maximum intensity.

In the example illustrated in FIG. 7, the accuracy average and the analysis accuracy of the median accuracy are improved as compared each filter size (T/f, T/2f, 16, 8, 3) in the typical transfer learning method.

(D) Others

The disclosed technique is not limited to the embodiment described above, and various modifications may be made without departing from the gist of the present embodiment. Each configuration and each processing of the present embodiment can be selected or omitted as needed or may be appropriately combined.

For example, in the embodiment described above, the information processing device 1 includes the transfer source dataset selection unit 100 and the filter setting unit 200. However, the embodiment is not limited to this.

The information processing device 1 may achieve, for example, prediction calculation processing using a machine learning model that has learned by transfer learning, in addition to the transfer source dataset selection unit 100 and the filter setting unit 200.

Furthermore, the present embodiment can be implemented and manufactured by those skilled in the art according to the above-described disclosure.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. An information processing program comprising instructions which, when the program is executed by a computer, cause the computer to carry out processing, the processing comprising:

   converting each data included in each of a plurality of classes of a transfer destination dataset and each data included in each of a plurality of classes of a plurality of transfer source dataset candidates into a frequency spectrum;
   calculating an average of a spectrum intensity of the data included in each class of the transfer destination dataset and each average of a spectrum intensity of the data included in the plurality of classes of the plurality of transfer source dataset candidates;
   calculating, for each of the plurality of classes of the plurality of transfer source dataset candidates, a similarity with the plurality of classes of the transfer destination dataset by using an inner product of the spectrum intensity of the data included in each class of the transfer destination dataset and the spectrum intensity of the data included in the plurality of classes of the plurality of transfer source dataset candidates; and
   determining a transfer source dataset that is the most similar to each class of the transfer destination dataset from among the plurality of transfer source dataset candidates on the basis of the calculated similarity.

2. The information processing program according to claim 1, the processing further comprising:
   determining a filter size and a number of filters in a convolutional neural network by using information regarding the frequency spectrum.

3. The information processing program according to claim 2, wherein
   the determining of the filter size is configured to determine a filter size by using a data length and a frequency of the data.

4. The information processing program according to claim 3, wherein
   the determining of the filter size is configured to determine the filter size that is proportional to the data length of the data and is inversely proportional to the frequency.

5. The information processing program according to claim 3 or 4, wherein
   the determining of the number of filters is configured to determine the number of filters by using an intensity of the frequency.

6. An information processing device comprising:

   a memory;
   a hardware processor coupled to the memory, the hardware processor being configured to perform processing, the processing including:

   converting each data included in each of a plurality of classes of a transfer destination dataset and each data included in each of a plurality of classes of a plurality of transfer source dataset candidates into a frequency spectrum;
   calculating an average of a spectrum intensity of the data included in each class of the transfer destination dataset and each average of a spectrum intensity of the data included in the plurality of classes of the plurality of transfer source dataset candidates;
   calculating, for each of the plurality of classes of the plurality of transfer source dataset candidates, a similarity with the plurality of classes of the transfer destination dataset by using an inner product of the spectrum intensity of the data included in each class of the transfer destination dataset and the spectrum intensity of the data included in the plurality of classes of the plurality of transfer source dataset candidates; and
   determining a transfer source dataset that is the most similar to each class of the transfer destination dataset from among the plurality of transfer source dataset candidates on the basis of the calculated similarity.

7. The information processing device according to claim 6, the processing further comprising:
   determining a filter size and a number of filters in a convolutional neural network on the basis of information regarding the frequency spectrum.

**8.** The information processing device according to claim 7, wherein
the determining of the filter size is configured to determine a filter size by using a data length and a frequency of the data.

**9.** The information processing device according to claim 7 or 8, wherein
the determining of the filter size is configured to determine the filter size that is proportional to the data length of the data and is inversely proportional to the frequency.

**10.** The information processing device according to any one of claims 7 to 9, wherein
the determining of the number of filters is configured to determine the number of filters by using an intensity of the frequency.

**11.** A computer-based method of an information processing, the method comprising:

converting each data included in each of a plurality of classes of a transfer destination dataset and each data included in each of a plurality of classes of a plurality of transfer source dataset candidates into a frequency spectrum;
calculating an average of a spectrum intensity of the data included in each class of the transfer destination dataset and each average of a spectrum intensity of the data included in the plurality of classes of the plurality of transfer source dataset candidates;
calculating, for each of the plurality of classes of the plurality of transfer source dataset candidates, a similarity with the plurality of classes of the transfer destination dataset by using an inner product of the spectrum intensity of the data included in each class of the transfer destination dataset and the spectrum intensity of the data included in the plurality of classes of the plurality of transfer source dataset candidates; and
determining a transfer source dataset that is the most similar to each class of the transfer destination dataset from among the plurality of transfer source dataset candidates on the basis of the calculated similarity.

**12.** The computer-based method according to claim 11, the method further comprising:
determining a filter size and a number of filters in a convolutional neural network by using information regarding the frequency spectrum.

**13.** The computer-based method according to claim 12, wherein
the determining of the filter size is configured to determine a filter size by using a data length and a frequency of the data.

**14.** The computer-based method according to claim 12 or 13, wherein
the determining of the filter size is configured to determine the filter size that is proportional to the data length of the data and is inversely proportional to the frequency.

**15.** The computer-based method according to any one of claims 12 to 14, wherein
the determining of the number of filters is configured to determine the number of filters by using an intensity of the frequency.

# FIG. 1

1

| | |
|---|---|
| **100**<br>TRANSFER SOURCE DATASET<br>SELECTION UNIT | **200**<br>FILTER SETTING UNIT |
| **101**<br>FIRST FOURIER TRANSFORM<br>PROCESSING UNIT | **201**<br>SECOND FOURIER TRANSFORM<br>PROCESSING UNIT |
| **102**<br>CLASS AVERAGE SEQUENCE<br>CALCULATION UNIT | **202**<br>AVERAGE SPECTRUM INTENSITY<br>CALCULATION UNIT |
| **103**<br>INTERCLASS DISTANCE<br>CALCULATION UNIT | **203**<br>FILTER DETERMINATION UNIT |
| **104**<br>TRANSFER SOURCE DATASET<br>SETTING UNIT | |

# FIG. 2

| | | $D_{SRC,1}$ | | $D_{SRC,2}$ | | $D_{SRC,3}$ | |
|---|---|---|---|---|---|---|---|
| | CLASS | 1 | 2 | 1 | 2 | 1 | 2 |
| TRANSFER DESTINATION | 1 | 0.1 | 0.9 | 0.9 | 0.9 | 0.9 | 0.9 |
| | 2 | 0.9 | 0.9 | 0.2 | 0.3 | 0.9 | 0.9 |
| | 3 | 0.9 | 0.9 | 0.2 | 0.9 | 0.4 | 0.3 |

# FIG. 3

```
                              1
                          ┌─────────────────────────────────────────────┐
                          │                                             │
                          │   ┌─────────11        ┌─────────14          │        ┌──────────┐ 14a
                          │   │              │     │                │    │        │          │
                          │   │  PROCESSOR   │─────│    GRAPHIC     │────┼────────│          │
                          │   │              │     │  PROCESSING    │    │        └──────────┘
                          │   └──────────────┘     │    DEVICE      │    │
                          │                        └────────────────┘    │
                          │   ┌─────────12        ┌─────────15          │            15a
                          │   │              │     │                │    │         ┌─────┐
                          │   │   MEMORY     │─────│ INPUT INTERFACE│────┼─────────┘     │
                          │   │              │     │                │    │
                          │   └──────────────┘     └────────────────┘    │            15b
                          │                                               │
                          │   ┌─────────13        ┌─────────16          │
                          │   │              │     │                │    │
                          │   │   STORAGE    │─────│ OPTICAL DRIVE  │◄═══┼════   16a
                          │   │   DEVICE     │     │    DEVICE      │◄═══┤
                          │   └──────────────┘     └────────────────┘    │
                          │                                               │        17a
                          │   ┌─────────18        ┌─────────17          │
                          │   │              │     │    DEVICE      │◄═══┤
                          │   │   NETWORK    │─────│  CONNECTION    │◄═══┤
                          │   │  INTERFACE   │     │  INTERFACE     │◄═══┤   17b
                          │   └──────────────┘     └────────────────┘    │
                          │              19                              │
                          └─────────────────────────────────────────────┘   17c
```

# FIG. 4

TRANSFER DESTINATION
DATASET $D_{tar}$

RELEARN    PREDICT

$f(x; \widehat{w})$

P4

TRANSFER SOURCE
DATA REPOSITORY

SELECT TRANSFER
SOURCE DATASET

TRANSFER SOURCE
DATA $D_{src}$

CNN FILTER SETTING

P3    TRANSFER

$f(x; \widehat{w})$

+ LEARN

P1    P2

# FIG. 5

```
           ┌─────────────┐
           │    START    │
           └──────┬──────┘
                  │
                  ▼
  ┌────────────────────────────────────────┐
  │ PERFORM FOURIER TRANSFORM ON ALL        │──A1
  │ SEQUENCES OF ALL DATASETS               │
  └────────────────────┬───────────────────┘
                       │
                       ▼
  ┌────────────────────────────────────────┐
  │ CALCULATE AVERAGE SEQUENCE OF FREQUENCY │──A2
  │ SPECTRUM INTENSITY FOR EACH CLASS       │
  └────────────────────┬───────────────────┘
                       │
                       ▼
  ┌────────────────────────────────────────┐
  │ CALCULATE DISTANCE BETWEEN AVERAGE      │
  │ SEQUENCES AS INNER PRODUCT BETWEEN      │──A3
  │ SPECTRUM INTENSITIES                    │
  └────────────────────┬───────────────────┘
                       │
                       ▼
  ┌────────────────────────────────────────┐
  │ CALCULATE SIMILARITY BETWEEN CLASSES    │──A4
  └────────────────────┬───────────────────┘
                       │
                       ▼
  ┌────────────────────────────────────────┐
  │ SELECT TRANSFER SOURCE DATASET FOR EACH │──A5
  │ CLASS AND GENERATE TRANSFER SOURCE      │
  │ DATASET                                 │
  └────────────────────┬───────────────────┘
                       │
                       ▼
              ┌─────────────┐
              │     END     │
              └─────────────┘
```

# FIG. 6

START

PERFORM FOURIER TRANSFORM ON ALL SEQUENCES OF TRANSFER SOURCE DATASET — B1

CALCULATE AVERAGE OF SPECTRUM INTENSITIES FOR EACH FREQUENCY — B2

DETERMINE FILTER SIZE AND THE NUMBER OF FILTERS — B3

END

# FIG. 7

|  | NO TRANSFER | TRANSFER (TYPICAL) | TRANSFER (THIS METHOD) |
|---|---|---|---|
| MEDIAN ACCURACY | 0.794872 | 0.802564 | 0.808974 |

# FIG. 8

| FILTER SIZE | T/f | T/2f | 16 | 8 | 3 | hybrid |
|---|---|---|---|---|---|---|
| ACCURACY AVERAGE | 0.791241 | 0.796517 | 0.79501 | 0.756216 | 0.737517 | 0.802871 |
| MEDIAN ACCURACY | 0.808889 | 0.808724 | 0.784615 | 0.775 | 0.764657 | 0.816049 |

EP 3 992 860 A1

FIG. 9

21

Europäisches
Patentamt

European
Patent Office

Office européen
des brevets

# EUROPEAN SEARCH REPORT

Application Number

EP 21 18 3954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHONG CHONGXIAO ET AL: "Cross-Scene Deep Transfer Learning With Spectral Feature Adaptation for Hyperspectral Image Classification", IEEE JOURNAL OF SELECTED TOPICS IN APPLIED EARTH OBSERVATIONS AND REMOTE SENSING, IEEE, USA, vol. 13, 2 June 2020 (2020-06-02), pages 2861-2873, XP011793556, ISSN: 1939-1404, DOI: 10.1109/JSTARS.2020.2999386 [retrieved on 2020-06-15] | 1-3,6-8, 11-13 | INV. G06N3/04 G06N3/08 |
| A | * the whole document * | 4,5,9, 10,14,15 | |
| X | LI XIANG ET AL: "Deep Learning-Based Machinery Fault Diagnostics With Domain Adaptation Across Sensors at Different Places", IEEE TRANSACTIONS ON INDUSTRIAL ELECTRONICS, IEEE SERVICE CENTER, PISCATAWAY, NJ, USA, vol. 67, no. 8, 22 August 2019 (2019-08-22), pages 6785-6794, XP011781995, ISSN: 0278-0046, DOI: 10.1109/TIE.2019.2935987 [retrieved on 2020-04-08] | 1,6,11 | TECHNICAL FIELDS SEARCHED (IPC) G06N |
| A | * the whole document * | 2-5, 7-10, 12-15 | |

-----

-/--

The present search report has been drawn up for all claims

| Place of search | Date of completion of the search | Examiner |
|---|---|---|
| Munich | 11 March 2022 | Cyranka, Oliver |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches Patentamt

European Patent Office

Office européen des brevets

## EUROPEAN SEARCH REPORT

Application Number

EP 21 18 3954

### DOCUMENTS CONSIDERED TO BE RELEVANT

| Category | Citation of document with indication, where appropriate, of relevant passages | Relevant to claim |
|---|---|---|
| X | WU JINGYAO ET AL: "Few-shot transfer learning for intelligent fault diagnosis of machine", MEASUREMENT, INSTITUTE OF MEASUREMENT AND CONTROL. LONDON, GB, vol. 166, 11 July 2020 (2020-07-11), XP086274525, ISSN: 0263-2241, DOI: 10.1016/J.MEASUREMENT.2020.108202 [retrieved on 2020-07-11] | 1,4-6, 9-11,14, 15 |
| A | * the whole document * | 2,3,7,8, 12,13 |

-----

**CLASSIFICATION OF THE APPLICATION (IPC)**

**TECHNICAL FIELDS SEARCHED (IPC)**

The present search report has been drawn up for all claims

| Place of search | Date of completion of the search | Examiner |
|---|---|---|
| Munich | 11 March 2022 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100318482
- JP 2020013547 A
- JP 2016191975 A